# EUROPÄISCHE PATENTANMELDUNG

(11) **EP 2 044 827 A2**
(43) Veröffentlichungstag der Anmeldung: **08.04.2009**
(21) Anmeldenummer: 08016933.7
(22) Anmeldetag: 26.09.2008
(51) Int. Cl.: A01C 7/08

(54) **Nachfüllsystem**

(30) Priorität: 02.10.2007 DE 102007047284
(71) Anmelder: Amazonen-Werke H. Dreyer GmbH & Co. KG, 49205 Hasbergen (DE)
(72) Erfinder: Johannaber, Stefan Jan, 49536 Lienen (DE); Götzen, Nils, 47506 Neukirchen-Vluyn (DE)

(57) **Zusammenfassung**

Nachfüllsystem für zumindest eines mit einem Überdruck beaufschlagten und zumindest ein mit einer Druckdifferenz beaufschlagtes Vereinzelungsorgan (6) ausgestatteten Vorratsbehälters (1) einer landwirtschaftlichen Verteilmaschine, welchem mittels zumindest einer pneumatisch beaufschlagten Nachfüllleitung (4) das sich in einem Vorratstank (2) befindliche Saatgut zugefördert wird. Um ein Nachfüllsystem für zumindest eines mit einem Überdruck beaufschlagten und zumindest mit einer Druckdifferenz beaufschlagten Vereinzelungsorgane (6) ausgestatteten Vorratsbehälter (1) einer landwirtschaftlichen Verteilmaschine in möglichst einfacher Weise zu ermöglichen, ist vorgesehen, wobei zum Nachfüllen des Vorratsbehälters (1) über die Nachfüllleitung (4) die Druckdifferenz, mit der das Vereinzelungsorgan (6) beaufschlagt wird, und der Luftdruck in dem nachzufüllenden Vorratsbehälter (1) mittels geeigneter Mittel (11) abgesenkt wird.

## Beschreibung

Die Erfindung betrifft ein Nachfüllsystem für Vorratsbehälter mit Saatgut aus einem größeren Vorratstank.

Derartige Nachfüllsysteme werden eingesetzt, wenn die den Vereinzelungsorganen zugeordneten Vorratsbehälter ein relativ kleines Fassungsvermögen aufweisen, wobei die Vereinzelungsorgane entweder in einem Bereich angeordnet sind, die keine größere Ausgestaltung der Vorratsbehälter zulassen oder die Vereinzelungsorgane mit den zugeordneten Vorratsbehältern dezentral angeordnet sind. Um dennoch eine große Arbeitsleistung ohne Unterbrechung der Arbeit zu erreichen, müssen die Vorratsbehälter nachgefüllt werden. Hierzu werden derartige Verteilmaschinen mit einem zentralen größeren Vorratstank ausgestattet, von dem aus über mechanische oder pneumatische Fördereinrichtungen die den Vereinzelungsorganen zugeordneten Vorratsbehälter während des Arbeits- oder Ausbringvorganges, ohne den Arbeitsvorgang an sich zu unterbrechen, kontinuierlich oder diskontinuierlich nachgefüllt werden.

Das Problem besteht nun jedoch darin, wenn derartige Vorratsbehälter, die Vereinzelungsorganen zugeordnet sind, die mit einem Überdruck beaufschlagt sind und das Vereinzelungsorgan ebenfalls mit einer Druckdifferenz beaufschlagt ist, während des Ausbringvorganges ohne Unterbrechung der Arbeit nachgefüllt werden sollen.

Derartige mit einem Überdruck beaufschlagte Vorratsbehälter müssen zur Erzeugung der Differenz für das Vereinzelungsorgan, um eine sichere Vereinzelung der Saatkörner zu gewährleisten mit einem relativ hohen Druck beaufschlagt werden, so dass es schwierig ist, mit einer pneumatisch beaufschlagten Nachfüllleitung mit Überdruck beaufschlagte Vorratsbehälter ohne Störung den auf einer Druckdifferenz beruhenden Vereinzelungsvorgang den Nachfüllvorgang durchzuführen.

Der Erfindung liegt daher die Aufgabe zugrunde, ein Nachfüllsystem für zumindest ein mit einem Überdruck beaufschlagten Vorratsbehälter und mit einer Druckdifferenz beaufschlagtes Vereinzelungsorgan ausgestatteten Vorratsbehälter einer landwirtschaftlichen Verteilmaschine in möglichst einfacher Weise zu ermöglichen.

Diese Aufgabe wird erfindungsgemäß durch die Merkmale des Patentanspruches 1 gelöst. Infolge dieser Maßnahme wird während des Wendevorganges, wenn also kein Saatgut über das Vereinzelungsorgan vereinzelt werden muss, der Vorratsbehälter vom Vorratstank mit Saatgut über die pneumatisch beaufschlagte Nachfüllleitung nachgefüllt. Dies kann in einfacher Weise dadurch geschehen, dass bei dem Nachfüllvorgang während des Wendevorganges am Feldende der Luftdruck in dem nachzufüllenden Vorratsbehälter abgesenkt wird und zwar soweit, dass die an den Vereinzelungsorganen aufgrund der Druckdifferenz anhaftenden Samenkörner noch ausreichend sicher bei stillstehendem Vereinzelungsorgan an diesem haften bleiben. Dieser abgesenkte Luftdruck reicht also noch aus, damit die Samenkörner an ein stillstehendes Vereinzelungsorgan noch haften bleiben. Dieser abgesenkte Luftdruck würde jedoch nicht ausreichend um während der Drehung des Vereinzelungsorgans beim aktiven Vereinzeln der Saatkörner ausreichend sicher Samenkörner an den Vereinzelungsorganen anlagern zu lassen.

Wenn der Nachfüllvorgang beim Wendevorgang beendet ist, wird der Luftdruck in dem nachzufüllenden Vorratsbehälter, der dem Vereinzelungsorgan zugeordnet ist, wieder auf das erforderliche Niveau, welches für die Vereinzelung der Samenkörner erforderlich ist, angehoben.

Um in einfacher Weise den jeweiligen Luftdruck sowohl für das Nachfüllen wie für das Vereinzeln sicher zu stellen, ist vorgesehen, dass ein Gebläse vorgesehen ist, welches die Druckdifferenz für das Vereinzelungsorgan über eine Druckdifferenzleitung erzeugt und die als Nachfüllleitung pneumatische Förderleitung beaufschlagt.

Um mit einem Gebläse sowohl die Druckdifferenz für das Vereinzelungsorgan zum Vereinzeln der Samenkörner zu erzeugen sowie die Nachfüllleitung mit einer entsprechenden Luftströmung zu beaufschlagen, ist vorgesehen, dass zwischen dem Gebläse einerseits sowie der pneumatischen Förderleitung und der Druckdifferenzleitung andererseits ein Y- oder hosenförmiges Zwischenleitungsstück angeordnet ist.

Um in einfacher Weise den Luftdruck absenken, sowie die Nachfüllleitung mit einer Luftströmung beaufschlagen zu können, ist vorgesehen, dass dem Zwischenleitungsstück ein umschaltbares Luftleitelement zugeordnet ist.

Um das Nachfüllsystem in einfacher Weise realisieren zu können, ist gemäß des Verfahrens gemäß vorgesehen, dass während des Wendevorganges am Feldende über die Mittel die Druckdifferenz reduziert und über die Förderleitung der Vorratsbehälter mit dem sich in dem Vorratstank befindlichen Saatgut nachgefüllt und nach Ende des Wendevorganges über die geeigneten Mittel die pneumatische Förderleitung abgeschaltet und der für den Ausbringvorgang erforderliche Druckdifferenz von dem Gebläse erzeugt wird.

Weitere Einzelheiten der Erfindung sind der Beispielsbeschreibung und den Zeichnungen zu entnehmen. Hierbei zeigen
- Fig. 1: das erfindungsgemäße Nachfüllsystem in Ausbringeinstellung für die Verteilmaschine und
- Fig. 2: das erfindungsgemäße Nachfüllsystem in der Nachfülleinstellung für die Verteilmaschine.

Das erfindungsgemäße Nachfüllsystem für den Vorratsbehälter 1 einer beispielsweise als Einzelkornsämaschine Verteilmaschine aus einem größeren Vorratstank 2 weist das motorisch angetriebene Druckluftgebläse 3, die Nachfüllleitung 4 und die Druckbeaufschlagungsleitung 5 für das Vereinzelungsorgan 6 der Verteilmaschine auf.

Die Verteilmaschine weist das motorisch angetriebene Vereinzelungsorgan 6 auf, welches mit einer Druckdifferenz beaufschlagt wird, damit sich die zu vereinzelnenden Samenkörner an die Perforationen des als Vereinzelungstrommel ausgebildeten Vereinzelungsorgan 6 beim drehen der Perforationen der Vereinzelungstrommel 6 durch den Saatgutvorrat anlagern können. Dem Vereinzelungsorgan 6 der Verteilmaschine ist ein Vorratsbehälter 1 zugeordnet. Das Vereinzelungssystem 6 der Verteilmaschine ist als Drucksystem ausgebildet. Dies bedeutet, dass auch der Vorratsbehälter 1 unter einem Überdruck gesetzt werden und daher druckdicht abgeschlossen ist. Während des Ausbringvorganges muss der Vorratsbehälter mind. mit einem Überdruck von etwa 40-50 mmbar beaufschlagt werden, um eine sichere und gleichmäßige Vereinzelung der Samenkörner über das Vereinzelungsorgan 6 durch die Druckdifferenz an der Perforationen sicher zu stellen. Unter diesem Überdruck steht auch der Vorratsbehälter 1. Dieser Überdruck wird durch das Druckluftgebläse 3 erzeugt. Hierzu ist das Gebläse 3 über die Druckleitung 5 mit dem Gehäuse 7 des Vereinzelungsorgans 6 und dem Vorratsbehälter 1 der Verteilmaschine verbunden.

Um den Vorratsbehälter 1 in absetziger Weise mit Material aus dem Vorratstank 2, der ein mehrfaches an Aufnahmevolumen als der Vorratsbehälter 1, der dem Vereinzelungsorgan 6 zugeordnet ist, aufweist, ist zwischen dem Gebläse 3 und dem Vorratsbehälter 1 die Nachfüllleitung 4 angeordnet, in welcher aus dem Vorratstank 2 über eine Zufuhrschleuse 8 Samenkörner eingespeist werden können. Diese Samenkörner werden dann von dem in der Nachfüllleitung 4 strömenden Druckluftstrom von der Einspeisestelle 9 des Vorratstanks 2 zum Vorratsbehälter 1 gefördert.

Zwischen dem Gebläse 3 einerseits und der pneumatischen Förderleitung, d.h. der Nachfüllleitung 4 und der Druckdifferenzleitung 5, das ist die Leitung 5, die zwischen dem Gebläse 3 und dem Vereinzelungsorgan 6 bzw. dessen zugeordneten Gehäuse 7 angeordnet ist, andererseits, ist ein Y- oder hosenförmiges Zwischenleitungsstück 10 angeordnet. In diesem Zwischenleitungsstück 10 ist das umschaltbare Luftleitelement 11 angeordnet.

Um über die Nachfüllleitung 4 in störungsfreier Weise Samenkörner in Vorratsbehälter 1 einfüllen zu können, ohne den Vereinzelungsvorgang am Vereinzelungsorgan 6 zu stören, wird der Luftdruck in dem nachzufüllenden Vorratsbehälter 1 abgesenkt. Dies geschieht durch geeignete Mittel, nämlich durch das in dem Zwischenleitungsstück 10 angeordnete umschaltbare Luftleitelement 11. Das Nachfüllen geschieht bei einer Unterbrechung des Vereinzelungs- und Ausbringvorganges, z.B. beim Wendevorgang am Feldende. Hier wird dann der Überdruck in dem Verteilergehäuse 7 des Vereinzelungsorgans 6 und die an dem Vereinzelungsorgan 6 anliegende Druckdifferenz auf etwa 20 mmbar abgesenkt. Diese Druckdifferenz ist ausreichend, dass bei stillstehenden Vereinzelungsorganen 6 die an den Perforationen anhaftenden Körner an diesen haften bleiben.

### Die Funktionsweise des Nachfüllsystems ist folgende:

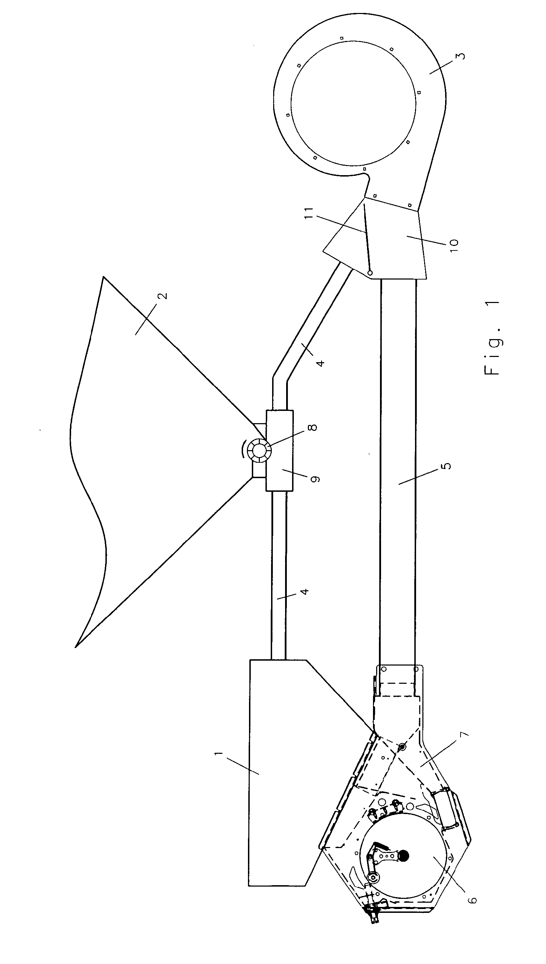

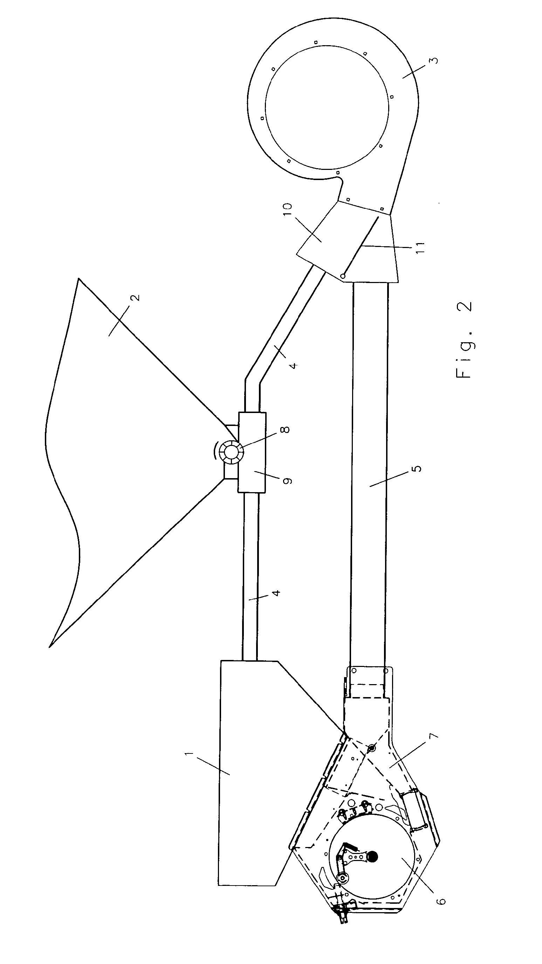

Während des Wendevorganges am Feldende findet der diskontinuierliche Nachfüllvorgang von Samenkörnern aus dem Vorratstank 2 in den Vorratsbehälter 1 in absetziger Weise statt. Wenn die Arbeitsbahn am Feldende vor Einleitung des Wendevorganges beendet ist, wird das Vereinzelungsorgan 6 stillgesetzt, so dass keine Samenkörner mehr den Saatgutablageeinrichtungen zugeleitet werden. Jetzt wird der Nachfüllvorgang, d.h. das Überladen der Samenkörner aus dem Vorratstank 2 in den Vorratsbehälter 1 über die Nachfüllleitung 4 durchgeführt. Hierzu wird zunächst die Druckdifferenz, die an den Vereinzelungsorgan 6 anliegt und der in dem Vorratsbehälter 1 herrschende Überdruck von 40-50 mmbar auf etwa 20 mmbar abgesenkt. Dies geschieht dadurch, dass das umschaltbare Luftleitelement 11 in dem Zwischenleitungsstück 10 aus der in Fig. 1 dargestellten Betriebsposition in die in Fig. 2 dargstellte Nachfüllposition verstellt wird. Dies kann mittels zugeordneter und nicht dargestellter motorischer Betätigungselemente über eine geeignete Fernbedienung oder ein Bordcomputersystem erfolgen. Anschließend wird über die Zuleitungsschleuse 8, die ebenfalls motorisch angetrieben ist, Material aus dem Vorratstank 2 in die Nachfüllleitung 4 eingespeist und über die in der Nachfüllleitung 4 von dem Gebläse 3 erzeugten Luftströmung erfasst und zu dem Vorratsbehälter 1 gefördert. Bei Beendigung des Wendevorganges und zu Beginn des Ausbring- und Vereinzelungsvorganges über die Vereinzelungstrommel 6 der Verteilmaschine wird die Zuleitungsschleuse 8 des Vorratstanks 2 abgeschaltet und das umschaltbare Luftleitelement 11 aus der in Fig. 2 dargestellten Position in die in Fig. 1 dargestellte Position verschwenkt. Somit wird der Nachfüllvorgang des Nachfüllsystems beendet und gleichzeitig wird die Druckdifferenz, die an der Perforation des Vereinzelungsorgans 6 anliegt, wieder auf die Vereinzelungsdruckdifferenz von 40-50 mmbar erhöht. Dies entspricht auch dem im Vorratsbehälter 1 dann wieder vorhandenen Überdruck.

## Patentansprüche

1. Nachfüllsystem für zumindest eines mit einem Überdruck beaufschlagten und zumindest ein mit einer Druckdifferenz beaufschlagtes Vereinzelungsorgan (6) ausgestatteten Vorratsbehälters (1) einer landwirtschaftlichen Verteilmaschine, welchem mittels zumindest einer pneumatisch beaufschlagten Nachfüllleitung (4) das sich in einem Vorratstank (2) befindliche Saatgut zugefördert wird, wobei zum Nachfüllen des Vorratsbehälters (1) über die Nachfüllleitung (4) die Druckdifferenz, mit der das Vereinzelungsorgan (6) beaufschlagt wird, und der Luftdruck in dem nachzufüllenden Vorratsbehälter (1) mittels geeigneter Mittel (11) abgesenkt wird.

2. Nachfüllsystem nach Anspruch 1, **dadurch gekennzeichnet, dass** ein Gebläse (3) vorgesehen ist, welches die Druckdifferenz für das Vereinzelungsorgan (6) über eine Druckdifferenzleitung erzeugt und die als Nachfüllleitung (4) pneumatische Förderleitung beaufschlagt.

3. Nachfüllsystem nach Anspruch 1, **dadurch gekennzeichnet, dass** zwischen dem Gebläse (3) einerseits sowie der pneumatischen Förderleitung (4) und der Druckdifferenzleitung (5) andererseits ein Y- oder hosenförmiges Zwischenleitungsstück (10) angeordnet ist.

4. Nachfüllsystem nach einem oder mehreren der vorstehenden Ansprüche, **dadurch gekennzeichnet, dass** dem Zwischenleitungsstück (10) ein umschaltbares Luftleitelement (11) zugeordnet ist.

5. Verfahren zur Durchführung des Nachfüllsystems nach einem oder mehreren der vorstehenden Ansprüche 1 bis 4, **dadurch gekennzeichnet, dass** während des Wendevorganges am Feldende über die Mittel (11) die Druckdifferenz reduziert und über die Förderleitung (4) der Vorratsbehälter (1) mit dem sich in dem Vorratstank (2) befindlichen Saatgut nachgefüllt und nach Ende des Wendevorganges über die geeigneten Mittel (11) die pneumatische Förderleitung (4) abgeschaltet und der für den Ausbringvorgang erforderliche Druckdifferenz von dem Gebläse (3) erzeugt wird.
